# EUROPEAN PATENT APPLICATION

(11) **EP 4 332 487 A1**
(43) Date of publication of application: **06.03.2024**
(21) Application number: 21939290.9
(22) Date of filing: 28.04.2021
(51) Int. Cl.: F28D 15/02, F28D 15/06

(54) **COOLING DEVICE AND COSMIC STRUCTURE**

(71) Applicant: MITSUBISHI ELECTRIC CORPORATION, Chiyoda-ku Tokyo 100-8310 (JP)
(72) Inventor: YAMADA, Toru, Tokyo 100-8310 (JP); MORIYAMA, Takashi, Tokyo 100-8310 (JP); KATO, Kenji, Tokyo 100-8310 (JP); ISHIKAWA, Hiroaki, Tokyo 100-8310 (JP)
(74) Representative: Plasseraud IP
(86) International application number: PCT/JP2021/017040
(87) International publication number: WO 2022/230129

(57) **Abstract**

A cooling device capable of preventing inflow of bubbles to a pump even in a zero-gravity space and a space structure including the cooling device are obtained. In a cooling device (100), a pump (1), a cooler (3), and a radiator (4) are connected sequentially by a refrigerant flow path (11). An accumulator (6) is connected to the refrigerant flow path (11) connecting the pump (1) and the radiator (4). The accumulator (6) includes a container storing refrigerant, a cooling section (7) cooling a base-end side of the container, and a heating section (8) heating a front-end side of the container.

## Description

### [Technical Field]

The present disclosure relates to a cooling device with an accumulator, and a space structure including the cooling device.

### [Background Technology]

In an artificial satellite moving in a planetary circular orbit, a system of heat pipes is embedded in a structure housing electronic devices inside and in panels supporting the electronic devices inside the structure. Heat generated by the electronic devices inside the structure is conducted through the system of heat pipes to a heat dissipation surface formed on a north-south outer space side of the structure. The heat conducted to the heat dissipation surface radiates from the heat dissipation surface toward the deep space. This cools the electronic devices. Using a pump, instead of the system of heat pipes, is proposed as another method to cool the electronic devices. For example, in Patent Document 1, it is described that a cooling device transports heat from the electronic devices to the heat dissipation surface by forcing refrigerant to move using a pump instead of using the system of heat pipes. In this cooling device, an accumulator has a heater, and an uncondensed gas accumulating inside the accumulator is heated. This adjusts the pressure inside the accumulator and re-liquefies the vapor flowing inside the accumulator.

### [Prior Art References]

### [Patent Documents]

[Patent Document 1] Japanese Unexamined Patent Application Publication No. S62-51768

### [Summary of the Invention]

### [Problems to be Solved by the Invention]

However, in a zero-gravity space, the method of heating the uncondensed gas by the heater attached to the accumulator and re-liquefying the vapor flowing in the accumulator cannot separate the gas-liquid by the gravity and unfortunately may allow bubbles to move from the accumulator into a refrigerant flow path and to flow into the pump.

The present disclosure is made to solve the above problems and to provide a cooling device and a space structure capable of preventing the inflow of bubbles into a pump even in the zero-gravity space.

### [Means for Solving Problem]

A cooling device according to the present disclosure includes: a pump for circulating refrigerant by boosting pressure of the refrigerant; a cooler for evaporating the refrigerant pumped from the pump; a radiator for condensing the refrigerant evaporated by the cooler; a refrigerant flow path sequentially connecting the pump, the cooler, and the radiator; and an accumulator including: a container for storing the refrigerant; a cooling section for cooling a base-end side of the container; and a heating section for heating a front-end side of the container, the base-end side of the container being connected to the refrigerant flow path connecting the pump and the radiator.

### [Effects of the Invention]

In temperature control of the accumulator, the cooling device according to the present disclosure collects the vapor at a location away from the refrigerant flow path by heating a front-end side of the accumulator, and condenses the refrigerant near a junction of the accumulator to the refrigerant flow path by cooling a base-end side of the accumulator where it is connected to the refrigerant flow path. This prevents bubbles from flowing into the refrigerant flow path and the pump.

### [Brief Description of the Drawings]

FIG. 1 shows a schematic diagram of an artificial satellite with a cooling device according to Embodiment 1 of the present disclosure.
FIG. 2 shows a schematic diagram of a state transition of the cooling device according to Embodiment 1 of the present disclosure.
FIG. 3 shows a refrigerant circuit diagram of the cooling device according to Embodiment 1 of the present disclosure.
FIG. 4 shows a detailed drawing of an accumulator according to Embodiment 1 of the present disclosure.
FIG. 5 shows a refrigerant circuit diagram of a cooling device according to Modification 1 of Embodiment 1 of the present disclosure.
FIG. 6 shows a detailed drawing of an accumulator of the cooling device according to Modification 1 of Embodiment 1 of the present disclosure.
FIG. 7 shows a refrigerant circuit diagram of a cooling device according to Modification 2 of Embodiment 1 of the present disclosure.
FIG. 8 shows a refrigerant circuit diagram of a cooling device according to Modification 3 of Embodiment 1 of the present disclosure.
FIG. 9 shows a refrigerant circuit diagram of a cooling device according to Modification 4 of Embodiment 1 of the present disclosure.
FIG. 10 shows a refrigerant circuit diagram of a cooling device according to Embodiment 2 of the present disclosure.
FIG. 11 shows a refrigerant circuit diagram of a cooling device according to Modification 1 of Embodiment 2 of the present disclosure.
FIG. 12 shows a refrigerant circuit diagram of a cooling device according to Modification 2 of Embodiment 2 of the present disclosure.
FIG. 13 shows a refrigerant circuit diagram of a cooling device according to Embodiment 3 of the present disclosure.
FIG. 14 shows a refrigerant circuit diagram of a cooling device according to Embodiment 4 of the present disclosure.
FIG. 15 shows a refrigerant circuit diagram of a cooling device according to Embodiment 5 of the present disclosure.
FIG. 16 shows a refrigerant circuit diagram of a cooling device according to Embodiment 6 of the present disclosure.
FIG. 17 shows a refrigerant circuit diagram of a cooling device according to Embodiment 7 of the present disclosure.
FIG. 18 shows a refrigerant circuit diagram of a cooling device according to Embodiment 8 of the present disclosure.
FIG. 19 shows a refrigerant circuit diagram of a cooling device according to Embodiment 9 of the present disclosure.
FIG. 20 shows a refrigerant circuit diagram of a cooling device according to Embodiment 10 of the present disclosure.
FIG. 21 shows a refrigerant circuit diagram of a cooling device according to Embodiment 11 of the present disclosure.
FIG. 22 shows a refrigerant circuit diagram of a cooling device according to Embodiment 12 of the present disclosure.
FIG. 23 shows a refrigerant circuit diagram of a cooling device according to Embodiment 13 of the present disclosure.
FIG. 24 is a flowchart showing an operation of the cooling device according to Embodiment 13 of the present disclosure.
FIG. 25 shows a detailed drawing of an accumulator of a cooling device according to Embodiment 14 of the present disclosure.
FIG. 26 shows a detailed drawing of an accumulator of a cooling device according to Modification 1 of Embodiment 14 of the present disclosure.
FIG. 27 shows a detailed drawing of an accumulator of a cooling device according to Modification 2 of Embodiment 14 of the present disclosure.

### [Embodiments for Carrying Out the Invention]

Embodiments to be publicized according to the present disclosure will be described below with reference to the drawings. In the figures, the same symbols shall indicate the same or corresponding components.

### Embodiment 1

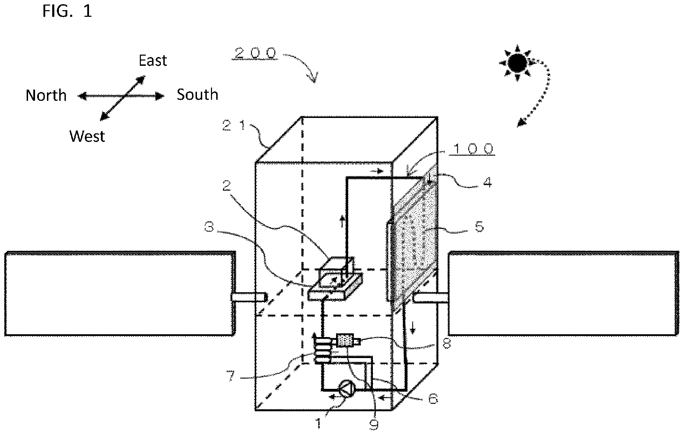

The present disclosure relates to a cooling device and a space structure with the cooling device, and the description uses an artificial satellite 200 as an example for the space structure. FIG. 1 shows a schematic diagram of the artificial satellite with the cooling device according to Embodiment 1 of the present disclosure. With reference to FIG. 1, a configuration of the artificial satellite 200 and a cooling device 100 will be described. The artificial satellite 200 includes an electronic device 2 and the cooling device 100 inside its main body 21. The electronic device 2 and the cooling device 100 are supported by frames. The electronic device 2 is a device that includes equipment to perform various missions and controllers of the equipment. The cooling device 100 is a device that cools the electronic device 2 by transporting the heat generated when the electronic device 2 operates to a heat dissipation surface 4 and dissipating the heat to the outside of the artificial satellite 200.

In the cooling device 100, a pump 1, a cooler 3 and a radiator 5 are sequentially connected by piping to form a refrigerant flow path 11 circularly so that refrigerant circulates. The pump 1 boosts the pressure of the refrigerant in liquid phase and circulates it. The cooler 3 cools the electronic device 2 by evaporating the refrigerant pumped from the pump 1. The radiator 5 condenses the refrigerant evaporated by the cooler 3 and dissipates the heat received from the electronic device 2. A part of the refrigerant condensed in the radiator 5 is stored in an accumulator 6 and the rest is returned to the pump 1.

The radiator 5 is provided inside or in contact with the heat dissipation surface 4 provided on the outer surface of the main body 21 so that the refrigerant heated in the cooler 3 is cooled. The heat received by the radiator 5 from the refrigerant is radiated from the heat dissipation surface 4 toward the deep space outside the artificial satellite 200.

For the artificial satellite 200 orbiting a planet, the heat dissipation surface 4 should be provided on both or one of a south-facing plane and a north-facing plane so that the strong solar radiation does not cause the heat dissipation by radiation to be reduced or does not cause the heat, to the contrary, to be received on the heat dissipation surface 4. The radiator 5 and the heat dissipation surface 4 may each be configured in multiple sections, and the refrigerant flow path 11 may be connected in series or in parallel. If it is structurally possible to switch the refrigerant flow path 11 to cause the refrigerant heated in the cooler 3 to flow into the radiator 5 on the heat dissipation surface 4 on a shaded side, then the heat dissipation surfaces 4 and the radiators 5 can be provided on an east-facing plane or/and a west-facing plane so that the heated refrigerant can be caused to flow from the cooler 3 to the radiator 5 on the shaded side to be cooled there by dissipating the heat from the heat dissipation surface 4.

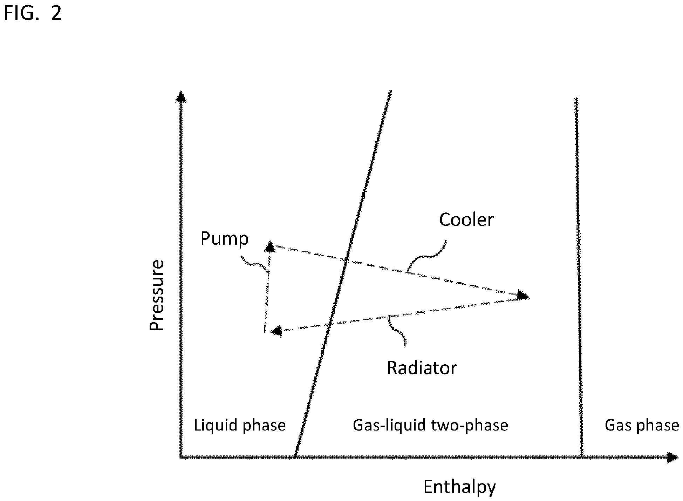

FIG. 2 shows a schematic diagram of a state transition of the cooling device according to Embodiment 1 of the present disclosure. As shown in FIG. 2, the liquid refrigerant whose pressure was boosted by the pump 1 increases its enthalpy by receiving heat from the electronic device 2 in the cooler 3 and decreases its enthalpy by releasing heat to the heat dissipation surface 4 in the radiator 5.

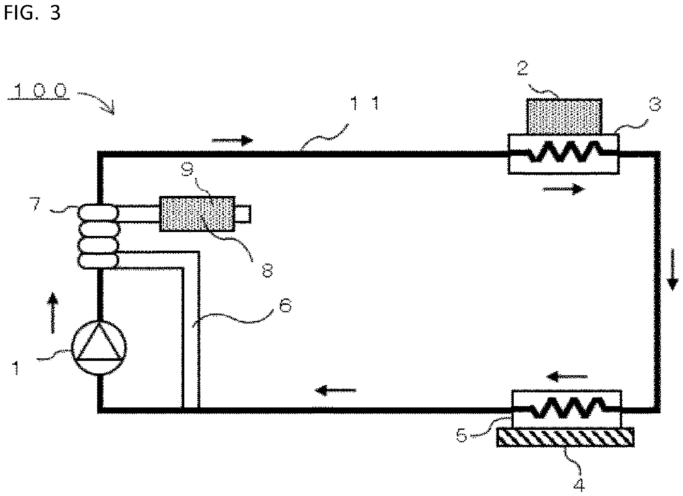

FIG. 3 shows a refrigerant circuit diagram of the cooling device according to Embodiment 1 of the present disclosure. With reference to FIG. 3, a configuration of the cooling device 100 according to Embodiment 1 will be described. In FIG. 3, the full-line arrows indicate the main flow direction of the refrigerant. As shown in FIG. 3, the cooling device 100 includes the accumulator 6 that adjusts a refrigerant amount and a saturation temperature. The accumulator 6 is, for example, a container formed in a tubular shape to internally store a part of the liquid refrigerant condensed in the radiator 5. The base-end side of the container is connected to the refrigerant flow path 11 connecting the radiator 5 to an inlet of the pump 1.

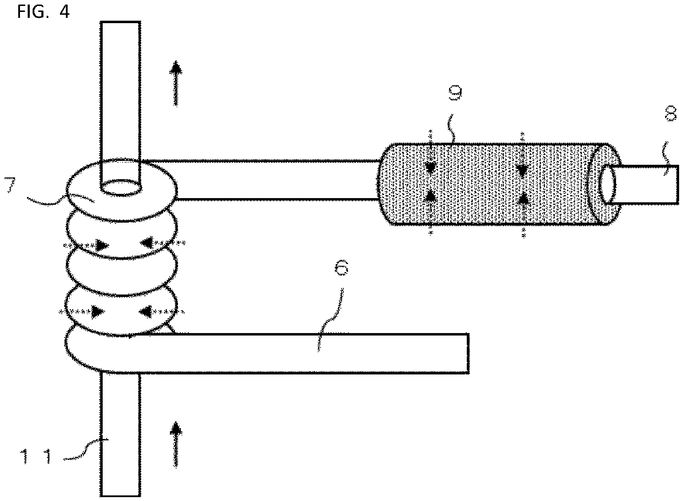

FIG. 4 shows a detailed drawing of the accumulator of the cooling device according to Embodiment 1 of the present disclosure. In this figure, the dotted lines indicate the direction of heat transfer. As shown in FIG. 4, the accumulator 6 includes a cooling section 7 cooling the base-end side connected to the refrigerant flow path 11 and a heating section 8 heating the front-end side. The cooling section 7 is provided between the base-end side connected to the refrigerant flow path 11 and the front-end side provided with the heating section 8, and performs cooling, for example, by bringing the container of the accumulator 6 into thermal contact with the refrigerant flow path 11 on the outlet side of the pump 1.

In the example shown in FIG. 4, the cooling section 7 cools the container of the accumulator 6 by winding the container around the refrigerant flow path 11 on the outlet side of the pump 1. Because the temperature of the refrigerant flow path 11 on the outlet side of the pump 1 is a temperature of the refrigerant that is sufficiently supercooled by the cooler 3, the base-end side of the accumulator 6 connected to the refrigerant flow path 11 and having the saturation temperature can be cooled by winding the accumulator 6 around the refrigerant flow path 11 on the outlet side of the pump 1. The heating section 8 is heated using, for example, a heater 9.

By providing the cooling section 7 in the accumulator 6 and cooling the base-end side of the accumulator 6 connected to the refrigerant flow path 11, the temperature of the base-end side connected to the refrigerant flow path 11 is lowered, thereby promoting the condensation of the refrigerant and facilitating collection of the liquid refrigerant at the base-end side.

On the other hand, by heating the front-end side of the accumulator 6, which is away from the refrigerant flow path 11, using the heating section 8, the temperature of the front-end side is raised, thereby promoting the evaporation of the refrigerant and facilitating the collection of the gas refrigerant at the front-end side. This prevents bubbles from flowing into the pump 1 and the refrigerant flow path 11.

Also, by winding the container of the accumulator 6 around the refrigerant flow path 11 on the outlet side of the pump 1, the refrigerant flow path 11 on the outlet side of the pump 1 is effective as a preheater to facilitate the evaporation of the refrigerant because the refrigerant flow path 11 there receives heat from the accumulator 6 and gives the heat to the refrigerant before the refrigerant flows into the cooler 3. Although the refrigerant flowing through the refrigerant flow path 11 on the outlet side of the pump 1 is a supercooled liquid as it was cooled by the radiator 5, it is desirable that its supercooling degree has been reduced just before the cooler 3 in order to promote boiling in the cooler 3. Winding the accumulator 6 around the refrigerant flow path 11 on the outlet side of the pump 1 also has the effect of cooling the accumulator 6 without increasing the pressure loss in the refrigerant flow path 11 on the outlet side of the pump 1. If the refrigerant flow path 11 on the outlet side of the pump 1 is wound around the accumulator 6, the pressure loss increases. On the other hand, the accumulator 6 wound around the refrigerant flow path 11 does not increase its pressure loss because there is almost no flow in the accumulator 6.

The operation of the accumulator 6 in the cooling device 100 will be described next. In the heating section 8 of the accumulator 6, when the heater 9 heats the front-end side of the container, the refrigerant evaporates and the pressure in the accumulator 6 also increases as the density of the gas increases. As the pressure increases, the liquid refrigerant in the accumulator 6 flows into the refrigerant flow path 11 and thus the liquid refrigerant amount in the refrigerant flow path 11 increases. At this moment, the increase in the liquid refrigerant amount in the refrigerant flow path 11 compresses the gas refrigerant and increases its pressure. The increase in the liquid refrigerant amount continues until the pressure in the accumulator 6 and the pressure in the refrigerant flow path 11 reach equilibrium. As the pressure increases, the saturation temperature of the refrigerant also increases.

When the heater 9 is turned off, the temperature of the accumulator 6 is decreased and the gas refrigerant in the accumulator 6 is liquefied. In this case, as the density of the gas decreases, the pressure also decreases. Also, as the pressure decreases, the liquid refrigerant in the refrigerant flow path 11 flows into the accumulator 6, and the liquid refrigerant amount in the refrigerant flow path 11 decreases. At this moment, in the refrigerant flow path 11, the gas refrigerant expands to decrease its pressure due to the decrease in the liquid refrigerant amount. The decrease in the liquid refrigerant amount continues until the pressure in the accumulator 6 and the pressure in the refrigerant flow path 11 reach equilibrium. Also, as the pressure decreases, the saturation temperature of the refrigerant also decreases. Thus, the saturation temperature of the refrigerant and the refrigerant amount in the refrigerant flow path 11 can be adjusted by heating or stopping the heating of the heating section 8 of the accumulator 6 by means of control of the heater 9 as described above.

For the accumulator 6, by detecting the temperature and pressure, the temperature of the accumulator 6 is controlled so that the saturation vapor pressure inside the accumulator 6 is a proper value. Thus, the heating section 8 of the accumulator 6 heats the container using the heater 9, so that the evaporation of the liquid refrigerant in the cooler 3 is suppressed and the temperature increase in the electronic device 2 is prevented.

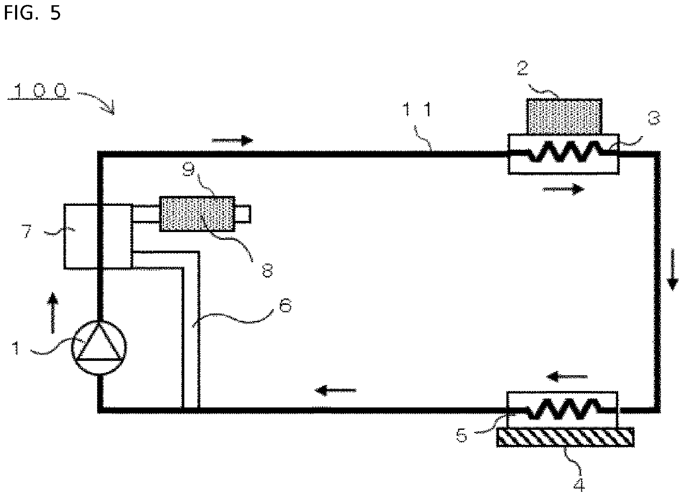

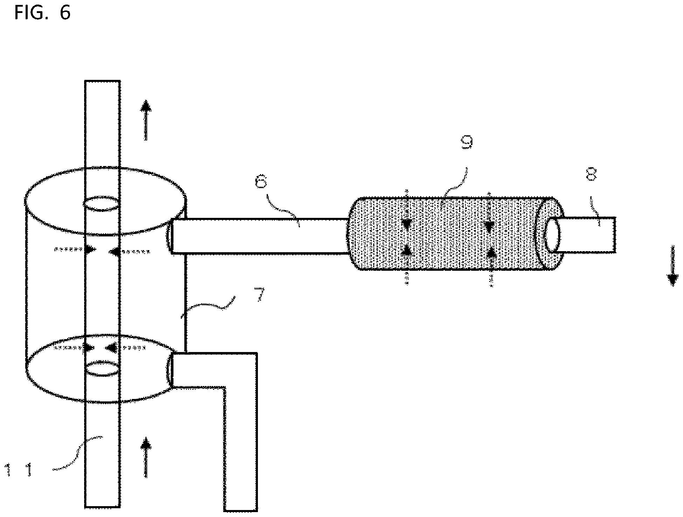

FIG. 5 shows a refrigerant circuit diagram of a cooling device according to Modification 1 of Embodiment 1 of the present disclosure. FIG. 6 shows a detailed drawing of an accumulator of the cooling device according to Modification 1 of Embodiment 1 of the present disclosure. With reference to FIG. 5 and FIG. 6, a configuration of the cooling device 100 according to Modification 1 of Embodiment 1 will be described. As shown in FIG. 5, in Modification 1 of Embodiment 1, the heating method of the accumulator 6 is similar to that of Embodiment 1, but the means of thermal contact between the refrigerant flow path 11 on the outlet side of the pump 1 and the accumulator 6 is different.

As shown in FIG. 6, in Modification 1 of Embodiment 1, the accumulator 6 has a hollow cylindrical portion as the cooling section 7 between the base-end side connected to the refrigerant flow path 11 and the front-end side heated by the heating section 8. The hollow portion of the accumulator 6 is connected to the piping of the refrigerant flow path 11 on the outlet side of the pump 1 to be a part of the refrigerant flow path 11. In the present modification, the refrigerant flowing through the refrigerant flow path 11 on the outlet side of the pump 1 and the refrigerant in the accumulator 6 exchange heat not via the respective solid parts, in contact with each other, of the piping of the refrigerant flow path 11 and the container of the accumulator 6, but directly via a pipe wall separating the refrigerant flow path 11 and the accumulator 6. This structure eliminates the contact thermal resistance occurring between the solid contact surfaces and thus promotes the heat transfer from the accumulator 6 to the piping of the refrigerant flow path 11 on the outlet side of the pump 1 as compared to the case of winding the accumulator 6 around the refrigerant flow path 11.

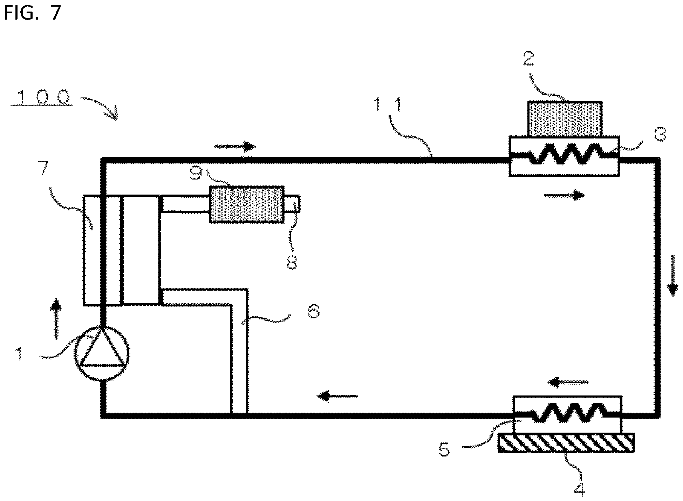

FIG. 7 shows a refrigerant circuit diagram of a cooling device according to Modification 2 of Embodiment 1 of the present disclosure. With reference to FIG. 7, a configuration of the cooling device 100 according to Modification 2 of Embodiment 1 will be described. In Modification 2 of Embodiment 1, the heating method of the accumulator is similar to that of Embodiment 1, but the means of contact between the refrigerant flow path 11 on the outlet side of the pump 1 and the accumulator 6 is different.

As shown in FIG. 7, in Modification 2 of Embodiment 1, the cooling section 7 of the accumulator 6 is formed by joining together a heat exchange plate including an outlet path of the pump 1 inside and a heat exchange plate including a part of the container of the accumulator 6 inside. If the outlet path of the pump 1 within the joined heat exchange plate is formed to be connected to the refrigerant flow path 11 with a continuous diameter using a straight pipe, the pressure loss of the refrigerant flow path 11 will not increase. In the present modification, the large contact area created between the accumulator 6 and the refrigerant flow path 11 on the outlet side of the pump 1 facilitates the heat transfer from the accumulator 6 to the piping of the refrigerant flow path 11 on the outlet side of the pump 1 as compared to the case of winding the accumulator 6 around the refrigerant flow path 11.

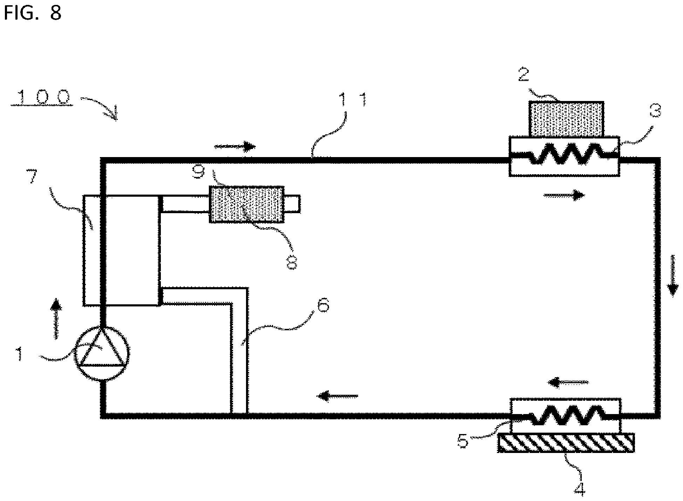

FIG. 8 shows a refrigerant circuit diagram of a cooling device according to Modification 3 of Embodiment 1 of the present disclosure. With reference to FIG. 8, a configuration of the cooling device 100 according to Modification 3 of Embodiment 1 will be described. In Modification 3 of Embodiment 1, the heating method of the accumulator 6 is similar to that of Embodiment 1, but the means of contact between the refrigerant flow path 11 on the outlet side of the pump 1 and the accumulator 6 is different.

As shown in FIG. 8, in Modification 3 of Embodiment 1, the cooling section 7 of the accumulator 6 includes a heat exchange block within which the outlet path of the pump 1 and a part of the flow path of the accumulator 6 are separately formed. If the outlet path of the pump 1 within the heat exchange block is formed to be connected to the refrigerant flow path 11 with a continuous diameter using a straight pipe, the pressure loss of the refrigerant flow path 11 will not increase. The present modification eliminates the contact thermal resistance occurring between the solid contact surfaces and thus promotes the heat transfer from the accumulator to the piping of the refrigerant flow path 11 on the outlet side of the pump 1 as compared to the case of winding the accumulator 6 around the refrigerant flow path 11.

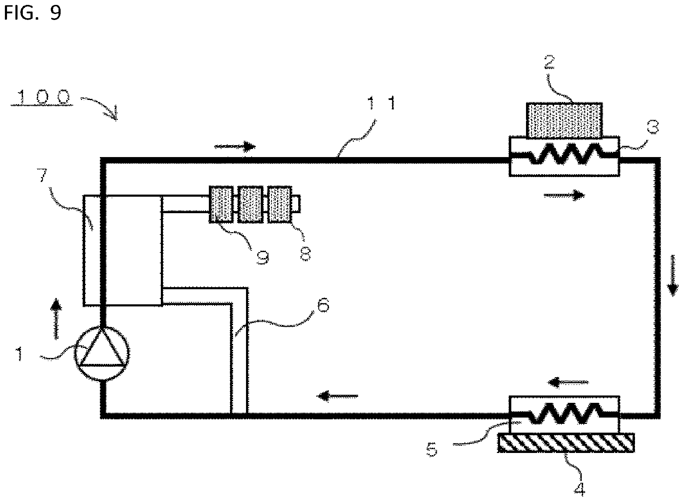

FIG. 9 shows a refrigerant circuit diagram of a cooling device according to Modification 4 of Embodiment 1 of the present disclosure. With reference to FIG. 9, a configuration of the cooling device 100 according to Modification 4 of Embodiment 1 will be described. Although the cooling method of the accumulator 6 is similar to that of Embodiment 1, Modification 4 of Embodiment 1 differs in that the heater 9 used in the heating section 8 is divided into three. The accumulator 6 can be heated by means of on/off control of the multiple heaters 9 each of which can be switched on and off, so that the control is simplified as compared to the case where the current of the single heater 9 is controlled. The configuration of dividing the heater 9 can be applied to other embodiments and modifications.

As described above, the cooling device 100 according to the present embodiment includes the pump 1, the cooler 3, the radiator 5 and the refrigerant flow path 11 circularly formed by connecting the former three components in sequence, wherein the base-end side of the container of the accumulator 6 is connected to the refrigerant flow path 11 connecting the pump 1 and the radiator 5. In the accumulator 6, the base-end side is cooled by the cooling section 7 and the front-end side is heated by the heating section 8.

With this configuration, the temperature of the base-end side connected to the refrigerant flow path 11 of the accumulator 6 is decreased and thus the condensation of the refrigerant is promoted. As a result, the liquid refrigerant collects on the base-end side. Also, the temperature of the front-end side of the accumulator 6 away from the refrigerant flow path 11 is increased and thus the evaporation of the refrigerant is promoted. As a result, the gas refrigerant collects on the front-end side. As a result, the inflow of bubbles into the pump 1 and the refrigerant flow path 11 can be prevented. Preventing the inflow of bubbles into the pump 1 ensures the long-term reliability of the cooling device 100.

### Embodiment 2

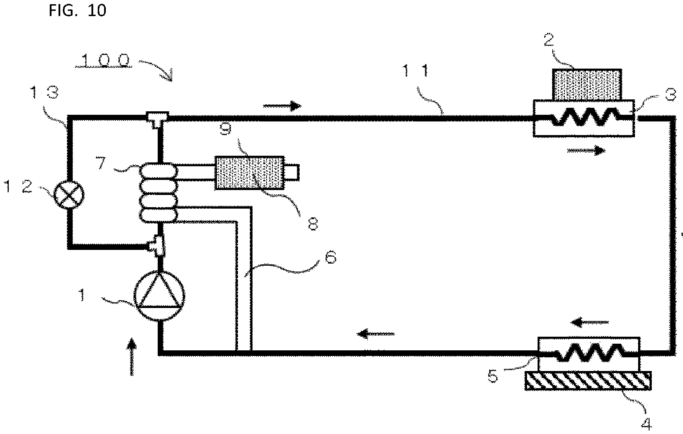

FIG. 10 shows a refrigerant circuit diagram of a cooling device according to Embodiment 2 of the present disclosure. In the following, the description of the similarities to Embodiment 1 will be omitted, and the description will focus on the differences. In Embodiment 2, as shown in FIG. 10, in the accumulator 6, the base-end side connected to the refrigerant flow path 11 is cooled by the cooling section 7, and the front-end side is heated by the heating section 8 as in Embodiment 1. The cooling section 7 of the accumulator 6 cools the base-end side by bringing the container into thermal contact with the refrigerant flow path 11 on the outlet side of the pump 1.

In Embodiment 2, the refrigerant flow path 11 is characterized in that a bypass flow path 13 having a valve 12 is further provided to the refrigerant flow path 11 on the outlet side of the pump 1 as a sub-flow path in addition to the main flow path formed circularly by sequentially connecting the pump 1, the cooler 3 and the radiator 5. A base-end side of the bypass flow path 13 is connected to the upstream of the refrigerant flow path 11 in contact with the cooling section 7 of the accumulator 6, and a front-end side of the bypass flow path 13 is connected to the downstream of the refrigerant flow path 11 in contact with the cooling section 7 of the accumulator 6.

In Embodiment 2, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

In addition, in Embodiment 2, the ratio of the refrigerant flow rates between the refrigerant flow path 11 which is in contact with the accumulator 6 and the bypass flow path 13 which is not in contact with the accumulator 6 can be controlled by the degree of opening and closing of the valve 12. Therefore, if the temperature of the accumulator 6 falls too low, it can be raised by increasing the flow rate through the bypass flow path 13 without increasing the amount of heat applied by the heating section 8 as compared to Embodiment 1.

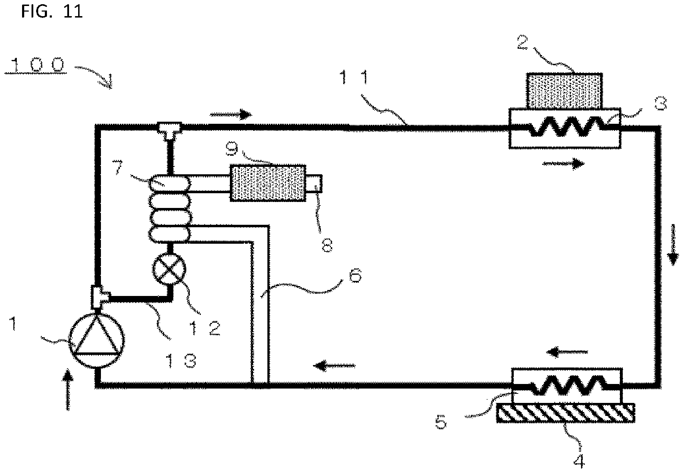

FIG. 11 shows a refrigerant circuit diagram of a cooling device according to Modification 1 of Embodiment 2 of the present disclosure. With reference to FIG. 11, a configuration of the cooling device 100 according to Modification 1 of Embodiment 2 will be described. Modification 1 of Embodiment 2 is characterized in that the bypass flow path 13 having the valve 12 is brought in contact with the accumulator 6. In Modification 1, the refrigerant flow path 11 in contact with the accumulator 6 serves as a sub-flow path, allowing for greater flexibility in the piping configuration. As a result, the need for the cooling section 7 in the accumulator 6 to be located near the main flow path is eliminated.

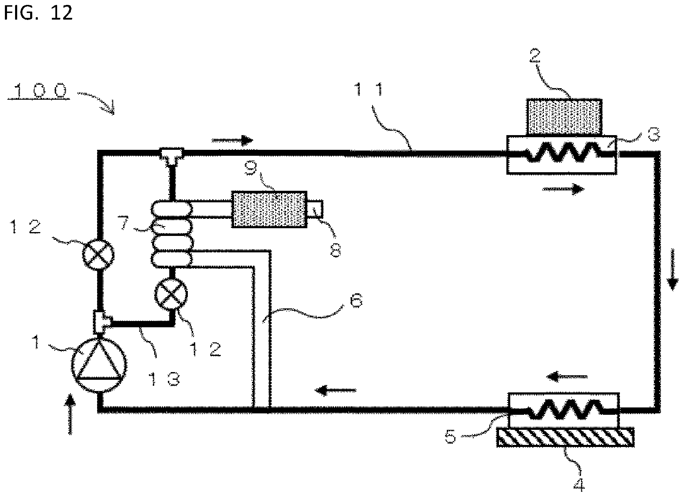

FIG. 12 shows a refrigerant circuit diagram of a cooling device according to Modification 2 of Embodiment 2 of the present disclosure. With reference to FIG. 12, a configuration of the cooling device 100 according to Modification 2 of Embodiment 2 will be described. In Modification 2 of Embodiment 2, both the main flow path and the bypass flow path 13 each include the valve 12.

In Modification 2 of Embodiment 2, in addition to the configuration of Modification 1, the main flow path also has the valve 12, so that 100% of the refrigerant flow can be diverted to the bypass flow path 13.

### Embodiment 3

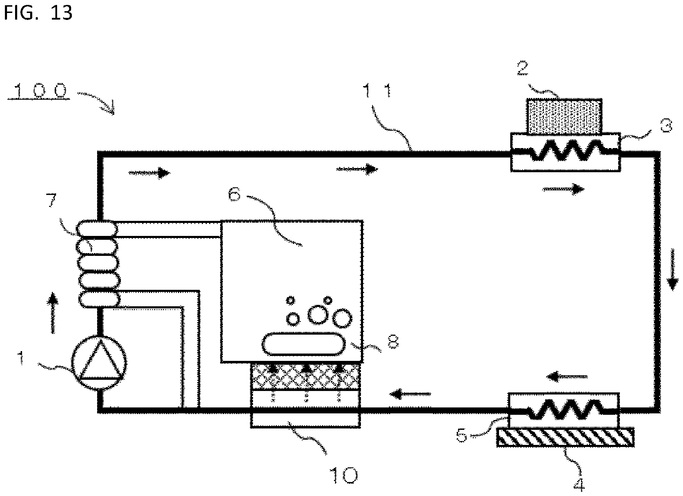

FIG. 13 shows a refrigerant circuit diagram of a cooling device according to Embodiment 3 of the present disclosure. In the following, the description of the similarities to Embodiment 1 will be omitted, and the description will focus on the differences. In Embodiment 3, as shown in FIG. 13, in the accumulator 6, the base-end side connected to the refrigerant flow path 11 is cooled by the cooling section 7, and the front-end side is heated by the heating section 8 as in Embodiment 1. The cooling section 7 of the accumulator 6 cools the base-end side by bringing the container into thermal contact with the refrigerant flow path 11 on the outlet side of the pump 1.

In Embodiment 1, the heating section 8 of the accumulator 6 heats the front-end side using the heater 9. In contrast, in Embodiment 3, the front-end side is heated using a Peltier element 10. One side of the Peltier element 10 is in contact with the front-end side of the container of the accumulator 6, and the other side thereof is in contact with the refrigerant flow path 11 on the outlet side of the radiator 5. The Peltier element 10 is capable of cooling a low temperature side and heating a high temperature side by moving heat in the opposite direction, i.e., from the low temperature side to the high temperature side by the flow of current. Cooling and heating can be switched by changing the direction of the current.

In Embodiment 3, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

In addition, in Embodiment 3, the heating of the accumulator 6 and the cooling of the refrigerant flow path 11 on the outlet side of the radiator 5 can be performed by bringing the Peltier element 10 into contact with the refrigerant flow path 11 on the outlet side of the radiator 5. Thus, favourable effects on the control of the accumulator 6 and, simultaneously, on the removal of residual bubbles from the radiator 5 can be expected.

### Embodiment 4

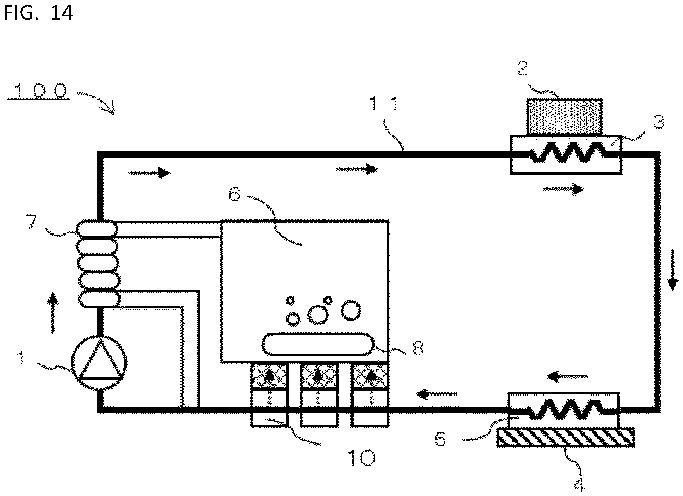

FIG. 14 shows a refrigerant circuit diagram of a cooling device according to Embodiment 4 of the present disclosure. In the following, the description of the similarities to Embodiment 1 will be omitted, and the description will focus on the differences. In Embodiment 4, as shown in FIG. 14, in the accumulator 6, the base-end side connected to the refrigerant flow path 11 is cooled by the cooling section 7, and the front-end side is heated by the heating section 8 as in Embodiment 1. The cooling section 7 of the accumulator 6 cools the base-end side by bringing the container into thermal contact with the refrigerant flow path 11 on the outlet side of the pump 1.

In Embodiment 1, the heating section 8 of the accumulator 6 heats the front-end side using the heater 9. In contrast, in Embodiment 4, the front-end side is heated using a plurality of Peltier elements 10. One side of each of the plurality of Peltier elements 10 is in contact with the front-end side of the container of the accumulator 6, and the other side thereof is in contact with the refrigerant flow path 11 on the outlet side of the radiator 5. That is, what is different from Embodiment 3 is that the Peltier element 10 is divided into several sections.

In Embodiment 4, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

In addition, in the present embodiment, the accumulator 6 can be heated by means of on/off control of the plurality of Peltier elements 10, so that the control is simplified as compared to the case where the current of the single Peltier element 10 is controlled. The configuration of disposing the plurality of Peltier elements 10 can be applied to other embodiments and modifications.

### Embodiment 5

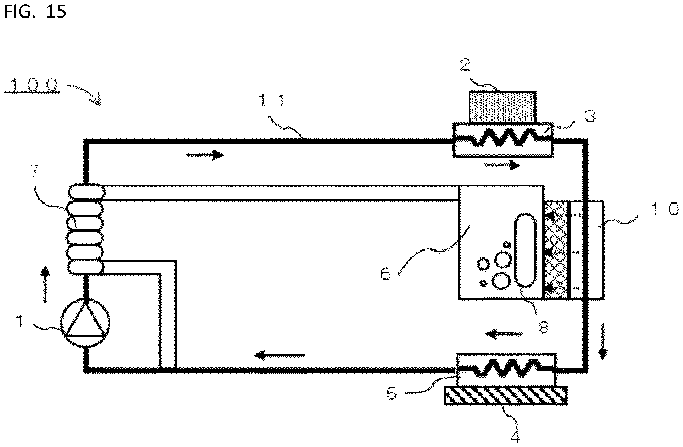

FIG. 15 shows a refrigerant circuit diagram of a cooling device according to Embodiment 5 of the present disclosure. In the following, the description of the similarities to Embodiment 1 will be omitted, and the description will focus on the differences. In Embodiment 5, as shown in FIG. 15, in the accumulator 6, the base-end side connected to the refrigerant flow path 11 is cooled by the cooling section 7, and the front-end side is heated by the heating section 8 as in Embodiment 1. In Embodiment 1, the heating section 8 of the accumulator 6 heats the front-end side using the heater 9. In contrast, in Embodiment 5, the front-end side is heated using the Peltier element 10. One side of the Peltier element 10 is in contact with the front-end side of the container of the accumulator 6, and the other side thereof is in contact with the refrigerant flow path 11 on the outlet side of the cooler 3.

In Embodiment 5, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

In addition, in Embodiment 5, one side of the Peltier element 10 is in contact with the front-end side of the container of the accumulator 6, and the other side thereof is in contact with the refrigerant flow path 11 on the outlet side of the cooler 3. This allows for the heating of the accumulator 6 and, simultaneously, the cooling of a two-phase flow path on the outlet side of the cooler 3. When the Peltier element 10 is provided to the refrigerant flow path 11 on the outlet side of the cooler 3, the temperature difference between the accumulator 6 and the two-phase flow path will not be greater than when the Peltier element 10 is provided to the refrigerant flow path 11 on the outlet side of the radiator 5. Therefore, besides the effect of removing the residual bubbles from the radiator 5, the effect of reducing the power consumption of the Peltier element 10 can be expected.

### Embodiment 6

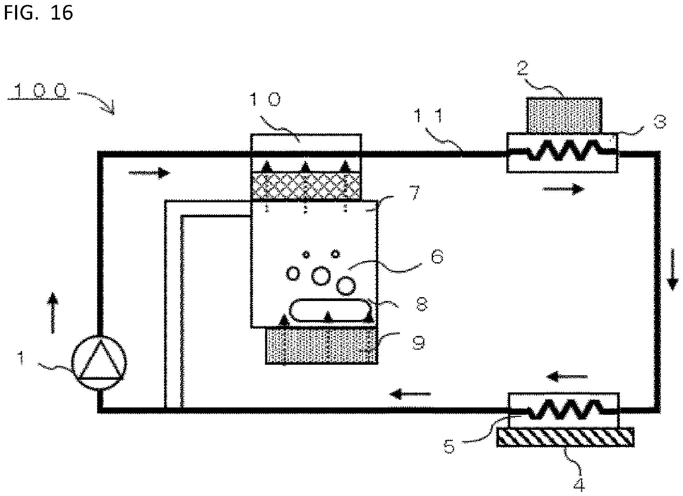

FIG. 16 shows a refrigerant circuit diagram of a cooling device according to Embodiment 6 of the present disclosure. In the following, the description of the similarities to Embodiment 1 will be omitted, and the description will focus on the differences. In Embodiment 6, as shown in FIG. 16, in the accumulator 6, the base-end side connected to the refrigerant flow path 11 is cooled by the cooling section 7, and the front-end side is heated by the heating section 8 as in Embodiment 1. In Embodiment 1, the cooling section 7 of the accumulator 6 performs cooling by bringing a portion between the base-end side and the front-end side of the container of the accumulator 6 into thermal contact with the refrigerant flow path 11 on the outlet side of the pump 1. In contrast, in Embodiment 6, the cooling is performed by using the Peltier element 10. One side of the Peltier element 10 is in contact with a portion between the base-end side and the front-end side of the container of the accumulator 6, and the other side thereof is in contact with the refrigerant flow path 11 on the outlet side of the pump 1.

In Embodiment 6, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

In addition, in Embodiment 6, one side of the Peltier element 10 is in contact with the portion between the base-end side and the front-end side of the accumulator 6 and, the other side thereof is in contact with the refrigerant flow path 11 on the outlet side of the pump 1, so that the accumulator 6 is cooled and, at the same time, the refrigerant in the refrigerant flow path 11 on the outlet side of the pump 1 is heated, the heating being effective as preheating of the refrigerant before flowing into the cooler 3. Also, in Embodiment 6, the use of the Peltier element 10 for cooling the accumulator 6 allows for active cooling of the accumulator 6 by changing the amount of electric power applied to the Peltier element 10.

### Embodiment 7

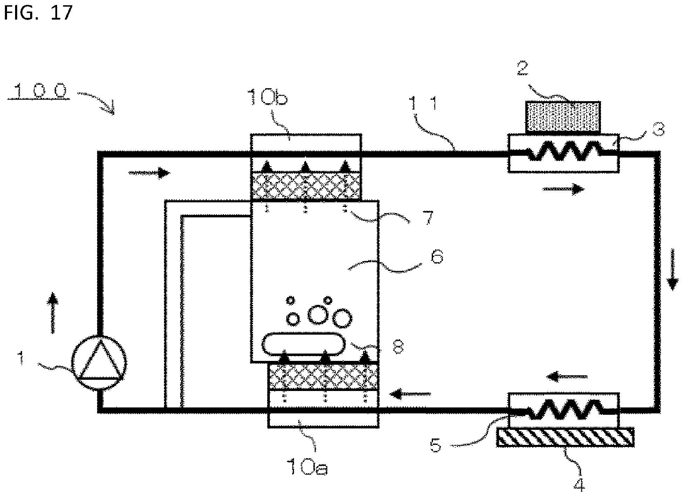

FIG. 17 shows a refrigerant circuit diagram of a cooling device according to Embodiment 7 of the present disclosure. In the following, the description of the similarities to Embodiment 1 will be omitted, and the description will focus on the differences. In Embodiment 7, as shown in FIG. 17, in the accumulator 6, the base-end side connected to the refrigerant flow path 11 is cooled by the cooling section 7, and the front-end side is heated by the heating section 8 as in Embodiment 1. In Embodiment 1, the heating section 8 of the accumulator 6 heats the front-end side of the accumulator 6 using the heater 9. In contrast, in Embodiment 7, the front-end side is heated using a Peltier element 10a. In Embodiment 1, the cooling section 7 of the accumulator 6 cools the base-end side by bringing a portion between the base-end side and the front-end side of the container of the accumulator 6 into thermal contact with the refrigerant flow path 11 on the outlet side of the pump 1. In contrast, herein, the base-end side is cooled by using a Peltier element 10b.

One side of the Peltier element 10a is in contact with the front-end side of the container of the accumulator 6, and the other side of the Peltier element 10 is in contact with the refrigerant flow path 11 on the outlet side of the radiator 5. One side of the Peltier element 10b is in contact with a portion between the base-end side and the front-end side of the container of the accumulator 6, and the other side thereof is in contact with the refrigerant flow path 11 on the outlet side of the pump 1.

In Embodiment 7, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

In addition, in Embodiment 7, the heating of the accumulator 6 and the cooling of the refrigerant flow path 11 on the outlet side of the radiator 5 can be performed by using the Peltier element 10a and the Peltier element 10b. Thus, the favourable effects on the control of the accumulator 6 and, simultaneously, on the removal of residual bubbles from the radiator 5 can be expected.

### Embodiment 8

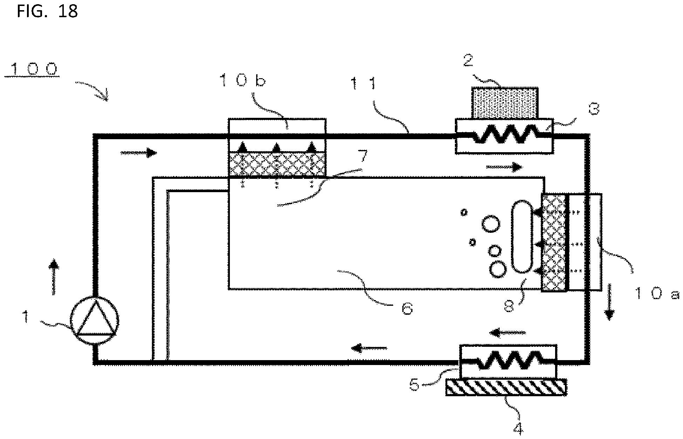

FIG. 18 shows a refrigerant circuit diagram of a cooling device according to Embodiment 8 of the present disclosure. In the following, the description of the similarities to Embodiment 1 will be omitted, and the description will focus on the differences. In Embodiment 8, as shown in FIG. 18, in the accumulator 6, the base-end side connected to the refrigerant flow path 11 is cooled by the cooling section 7, and the front-end side away from the base-end is heated by the heating section 8 as in Embodiment 1. In Embodiment 1, the heating section 8 of the accumulator 6 heats the front-end side of the accumulator 6 using the heater 9. In contrast, in Embodiment 8, the front-end side is heated using the Peltier element 10a. In Embodiment 1, the cooling section 7 of the accumulator 6 cools the base-end side by bringing a portion between the base-end side and the front-end side of the container of the accumulator 6 into thermal contact with the refrigerant flow path 11 on the outlet side of the pump 1. In contrast, in Embodiment 8, the cooling section 7 cools the base-end side using the Peltier element 10b.

One side of the Peltier element 10a is in contact with the front-end side of the container of the accumulator 6, and the other side thereof is in contact with the refrigerant flow path 11 on the outlet side of the cooler 3. One side of the Peltier element 10b is in contact with a portion between the base-end side and the front-end side of the container of the accumulator 6, and the other side thereof is in contact with the refrigerant flow path 11 on the outlet side of the pump 1.

In Embodiment 8, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

In addition, in Embodiment 8, the use of the Peltier elements 10a and 10b allows for the heating of the accumulator 6 and, simultaneously, the cooling of the two-phase flow path on the outlet side of the cooler 3. When the Peltier element 10a is provided to the refrigerant flow path 11 on the outlet side of the cooler 3, the temperature difference between the accumulator 6 and the two-phase flow path will not be greater than when the accumulator 6 is provided to the refrigerant flow path 11 on the outlet side of the radiator 5. Therefore, besides the effect of removing the residual bubbles from a condenser, the effect of reducing the power consumption of the Peltier elements can be obtained.

### Embodiment 9

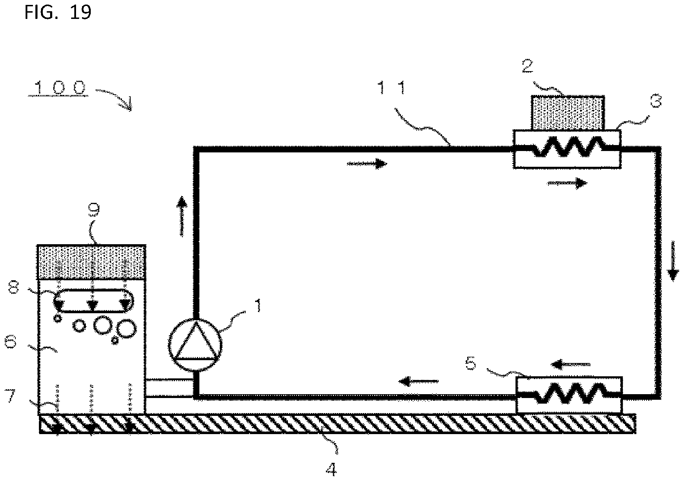

FIG. 19 shows a refrigerant circuit diagram of a cooling device according to Embodiment 9 of the present disclosure. In the following, the description of the similarities to Embodiment 1 will be omitted, and the description will focus on the differences. In Embodiment 9, as shown in FIG. 19, in the accumulator 6, the base-end side connected to the refrigerant flow path 11 is cooled by the cooling section 7, and the front-end side is heated by the heating section 8 as in Embodiment 1. In Embodiment 1, the cooling section 7 of the accumulator 6 cools the base-end side by bringing a portion between the base-end side and the front-end side of the container of the accumulator 6 into thermal contact with the refrigerant flow path 11 on the outlet side of the pump 1. In contrast, in Embodiment 9, the cooling section 7 cools the base-end side by bringing a portion between the base-end side and the front-end side of the container of the accumulator 6 into thermal contact with the heat dissipation surface 4.

In Embodiment 9, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

Furthermore, in Embodiment 9, the heat is released to the outside via the heat dissipation surface 4, so that the entire cooling device 100 is expected to be cooler as compared to Embodiments 1 to 8. Meanwhile, in an artificial satellite, which emits heat by means of radiation to the deep space, a rise in temperature of the heat dissipation surface 4 will increase the amount of heat emitted. Therefore, the heating of the heat dissipation surface 4 in the present embodiment is also expected to have the effect of increasing the amount of heat dissipated from the cooling device 100.

### Embodiment 10

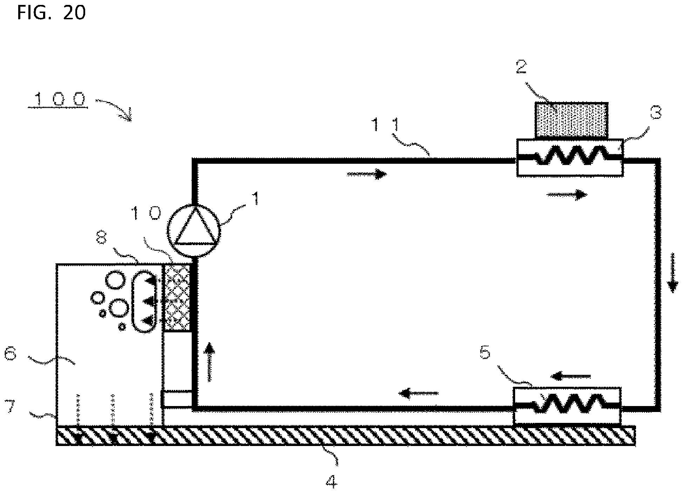

FIG. 20 shows a refrigerant circuit diagram of a cooling device according to Embodiment 10 of the present disclosure. In the following, the description of the similarities to Embodiment 1 will be omitted, and the description will focus on the differences. In Embodiment 10, as shown in FIG. 20, in the accumulator 6, the base-end side connected to the refrigerant flow path 11 is cooled by the cooling section 7, and the front-end side away from the base-end is heated by the heating section 8 as in Embodiment 1.

In Embodiment 1, the cooling is performed by bringing the cooling section 7 of the accumulator 6 into thermal contact with the refrigerant flow path 11 on the outlet side of the pump 1. In contrast, in Embodiment 10, the cooling is performed by bringing the cooling section 7 into thermal contact with the heat dissipation surface 4. In Embodiment 1, the heating section 8 of the accumulator 6 heats the front-end side using the heater 9. In contrast, in Embodiment 10, the front-end side is heated using the Peltier element 10. One side of the Peltier element 10 is in contact with the front-end side of the container of the accumulator 6, and the other side thereof is in contact with the refrigerant flow path 11 on the outlet side of the radiator 5.

In Embodiment 10, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

In addition, in Embodiment 10, the heating of the accumulator 6 and the cooling of the refrigerant flow path 11 on the outlet side of the radiator 5 can be performed by using the Peltier element 10. Thus, the favourable effects on the control of the accumulator 6 and, simultaneously, on the removal of residual bubbles from the radiator 5 can be obtained.

### Embodiment 11

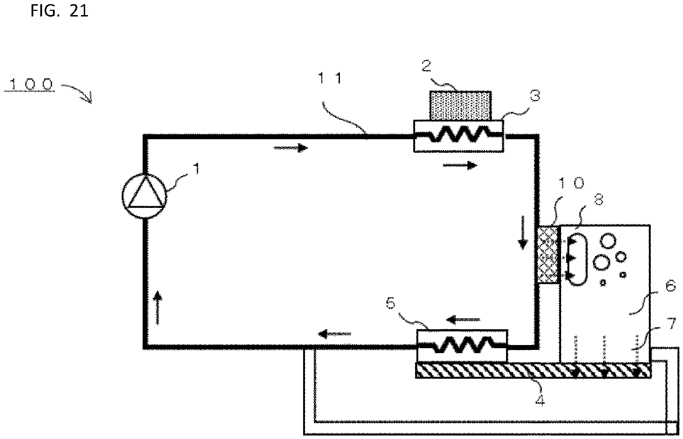

FIG. 21 shows a refrigerant circuit diagram of a cooling device according to Embodiment 11 of the present disclosure. In the following, the description of the similarities to Embodiment 1 will be omitted, and the description will focus on the differences. In Embodiment 11, as shown in FIG. 21, in the accumulator 6, the base-end side connected to the refrigerant flow path 11 is cooled by the cooling section 7, and the front-end side is heated by the heating section 8 as in Embodiment 1.

In Embodiment 1, the cooling section 7 of the accumulator 6 cools the base-end side by bringing a portion between the base-end side and the front-end side of the container of the accumulator 6 into thermal contact with the refrigerant flow path 11 on the outlet side of the pump 1. In contrast, in Embodiment 11, the cooling section 7 cools the base-end side by bringing a portion between the base-end side and the front-end side of the container of the accumulator 6 into thermal contact with the heat dissipation surface 4. In Embodiment 1, the heating section 8 of the accumulator 6 is heated using the heater 9. In contrast, in Embodiment 11, the heating section 8 is heated using the Peltier element 10. One side of the Peltier element 10 is in contact with the heating section 8 of the accumulator 6, and the other side thereof is in contact with the refrigerant flow path 11 on the outlet side of the cooler 3.

In Embodiment 11, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

In addition, in Embodiment 11, one side of the Peltier element 10 is in contact with the front-end side of the container of the accumulator 6, and the other side thereof is in contact with the refrigerant flow path 11 on the outlet side of the cooler 3. This allows for the heating of the accumulator 6 and, simultaneously, the cooling of a two-phase flow path on the outlet side of the cooler 3. When the Peltier element 10 is provided to the refrigerant flow path 11 on the outlet side of the cooler 3, the temperature difference between the accumulator 6 and the two-phase flow path will not be greater than when the Peltier element 10 is provided to the refrigerant flow path 11 on the outlet side of the radiator 5. Therefore, besides the effect of removing the residual bubbles from the radiator 5, the effect of reducing the power consumption of the Peltier element 10 can be expected.

### Embodiment 12

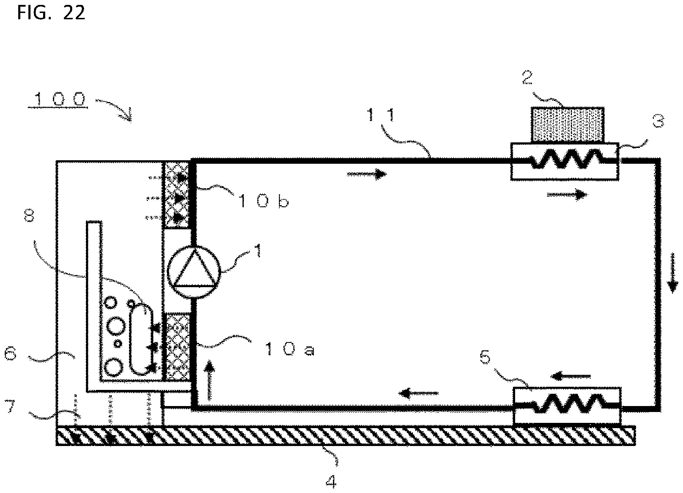

FIG. 22 shows a refrigerant circuit diagram of a cooling device according to Embodiment 12 of the present disclosure. In the following, the description of the similarities to Embodiment 1 will be omitted, and the description will focus on the differences. In Embodiment 12, as shown in FIG. 22, in the accumulator 6, the base-end side connected to the refrigerant flow path 11 is cooled by the cooling section 7, and the front-end side away from the base-end is heated by the heating section 8 as in Embodiment 1.

In Embodiment 1, the cooling section 7 of the accumulator 6 cools the base-end side by bringing a portion between the base-end side and the front-end side of the container of the accumulator 6 into thermal contact with the refrigerant flow path 11 on the outlet side of the pump 1. In contrast, in Embodiment 12, the cooling is performed by bringing a portion between the base-end side and the front-end side of the container of the accumulator 6 into thermal contact with the heat dissipation surface 4 and the Peltier element 10b. One side of the Peltier element 10b is in contact with the portion between the base-end side and the front-end side of the container of the accumulator 6, and the other side thereof is in contact with the refrigerant flow path 11 on the outlet side of the pump 1.

In Embodiment 1, the heating section 8 of the accumulator 6 is heated using the heater 9. In contrast, in Embodiment 12, the heating section 8 is heated using the Peltier element 10a. One side of the Peltier element 10a is in contact with the front-end side of the container of the accumulator 6, and the other side thereof is in contact with the refrigerant flow path 11 on the outlet side of the radiator 5.

In Embodiment 12, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

Furthermore, in Embodiment 12, the cooling section 7 of the accumulator 6 performs cooling by means of both the Peltier element 10b and the heat dissipation surface 4. This increases the effect of removing the residual bubbles from the radiator 5 more than using only one of the means.

### Embodiment 13

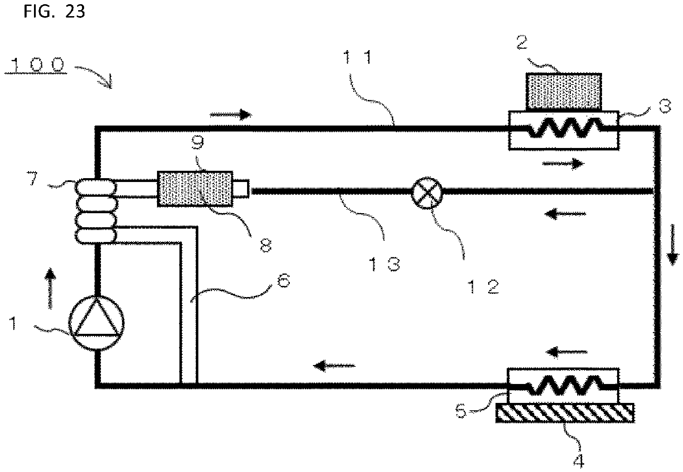

FIG. 23 shows a refrigerant circuit diagram of a cooling device according to Embodiment 13 of the present disclosure. In the following, the description of the similarities to Embodiment 1 will be omitted, and the description will focus on the differences. In Embodiment 13, as shown in FIG. 23, in the accumulator 6, the base-end side connected to the refrigerant flow path 11 is cooled by the cooling section 7, and the front-end side is heated by the heating section 8 as in Embodiment 1.

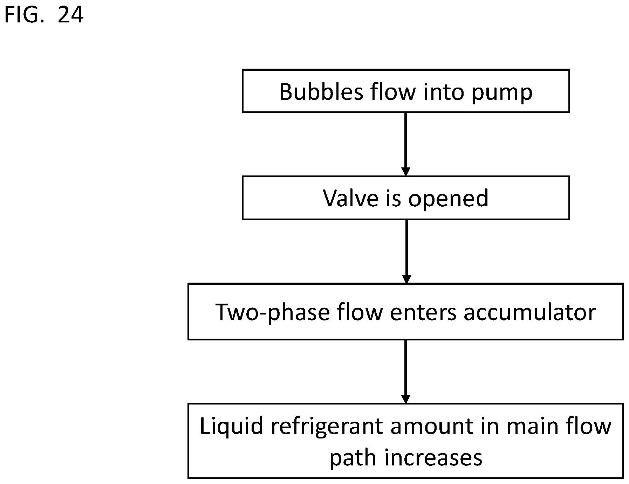

Furthermore, in Embodiment 13, the front-end side of the accumulator 6 and the refrigerant flow path 11 are connected by the bypass flow path 13. The bypass flow path 13 includes the valve 12. FIG. 24 is a flowchart showing an operation of the cooling device according to Embodiment 13 of the present disclosure. As shown in FIG. 24, for example, the refrigerant in the main flow path is caused to flow into the accumulator 6 by opening the valve 12 when the bubble inflow into the pump 1 is confirmed. This allows the gas-liquid two-phase flow downstream of the cooler 3 to flow into the accumulator 6 and increases the liquid refrigerant amount in the main flow path.

In Embodiment 13, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

Furthermore, in Embodiment 13, the front-end side of the accumulator 6 and the refrigerant flow path 11 are connected by the bypass flow path 13 in which the valve 12 is provided, so that the liquid refrigerant amount in the main flow path of the refrigerant flow path 11 can be increased. However, if the valve 12 is left open, the accumulator 6 also becomes a part of the refrigerant flow path 11, allowing the gas-liquid two-phase flow downstream of the cooler to enter the pump 1. Therefore, the valve 12 should be opened and closed as needed.

### Embodiment 14

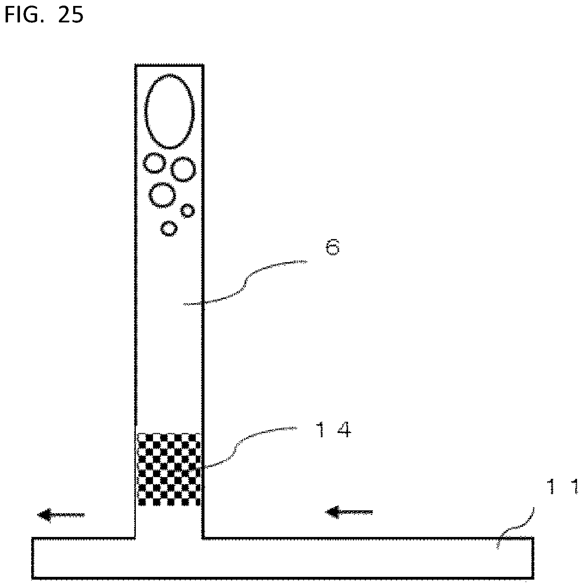

FIG. 25 shows a detailed drawing of an accumulator of a cooling device according to Embodiment 14 of the present disclosure. In the following, the description of the similarities to Embodiment 1 will be omitted, and the description will focus on the differences. In Embodiment 14, in the accumulator 6, the base-end side connected to the refrigerant flow path 11 is cooled by the cooling section 7, and the front-end side is heated by the heating section 8 as in Embodiment 1. In addition, in Embodiment 14, a porous material 14 is provided on the base-end side of the accumulator 6 connected to the refrigerant flow path 11, as shown in FIG. 25.

In Embodiment 14, as in Embodiment 1, the base-end side of the accumulator 6 connected to the refrigerant flow path 11 is cooled by the cooling section 7, and the front-end side of the accumulator 6 is heated by the heating section 8, so that the inflow of bubbles into the pump 1 and the refrigerant flow path 11 can be prevented.

Furthermore, in Embodiment 14, the porous material 14 provided to fill up the junction from the accumulator 6 to the refrigerant flow path 11 forms a liquid film on its surface by surface tension, so that the effect of preventing bubbles from flowing into the refrigerant flow path 11 is expected.

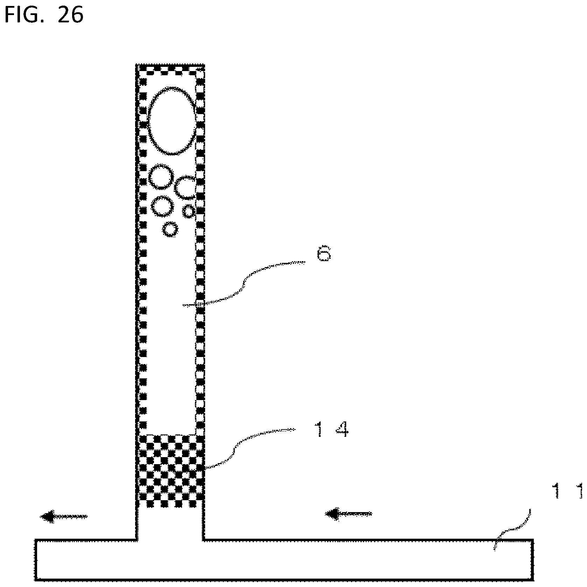

With reference to FIG. 26, a configuration of an accumulator 6 according to Modification 1 of Embodiment 14 will be described. Modification 1 of Embodiment 14 is characterized by the porous material 14 applied over the inner wall of the accumulator 6 in addition to the porous material 14 provided to fill up the junction from the accumulator 6 to the refrigerant flow path 11.

In this Modification, the flow of liquid facilitated by the effect of surface tension due to wicks reduces the distribution range of temperature in the liquid within the accumulator as compared to Embodiment 14. As a result, it is expected that the temperature gradient of gas within the accumulator is less likely to occur, and the responsiveness of the accumulator 6 is improved.

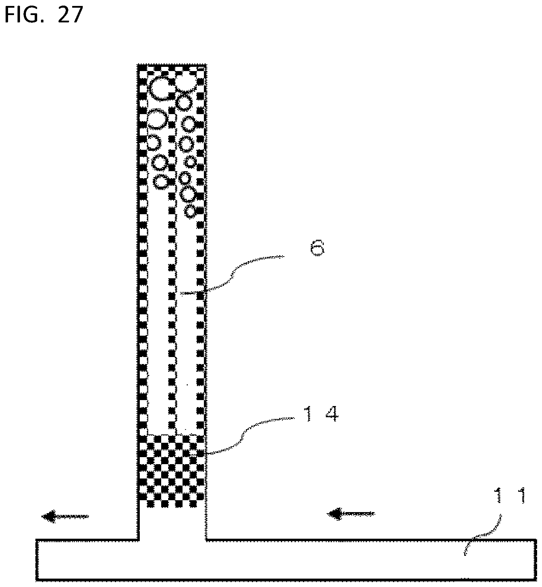

FIG. 27 shows a detailed drawing of an accumulator of a cooling device according to Modification 2 of Embodiment 14 of the present disclosure. With reference to FIG. 27, a configuration of the accumulator 6 according to Modification 2 of Embodiment 14 will be described. In Embodiment 14, in addition to the porous material 14 applied over the inner wall of the accumulator 6 according to Modification 1, Modification 2 is characterized in that the space in the accumulator 6 is separated by the porous material 14, or if it is not separated, further accommodates the porous material 14 protruding into the space, the protrusion being in contact with the porous material 14 applied over the inner wall or in contact with the porous material 14 filling up the junction to the refrigerant flow path 11. In this Modification 2, with the greater volume of porous material than that in Modification 1, the flow of liquid facilitated more by the effect of surface tension due to wicks more reduces the distribution range of temperature in the liquid within the accumulator. As a result, it is expected that the temperature gradient of gas within the accumulator 6 is further less likely to occur, and the responsiveness of the accumulator 6 is more improved.

In Embodiments 1 through 14, the cooling device 100 is mounted on the artificial satellite 200, as an example, but the cooling device 100 may be mounted on systems other than artificial satellites. The other systems include, for example, space structures such as a space probe and a spacecraft, not to mention ground facilities. For the use in a ground facility, the electronic device 2 can be cooled with low power consumption and high heat dissipation capacity, for example, by replacing the heat dissipation surface 4 with a heat dissipation fin capable of being in contact with various low temperature fluids such as air and water.

The cooling device 100 can be used regardless of the direction of gravity. Thus, it can be installed in a variety of orientations on the ground facilities and will not fail even if the orientation changes during prolonged use. The cooling device can be installed and operate properly with moving equipment subject to inertial forces other than gravity, such as an automobile, an aircraft, a railcar, and an elevator.

The cooling device may, for example, be installed in an engine-driven automobile. In this case, instead of the electronic device 2, the internal combustion engine, which is a heat-generating system, is a cooling target.

Also, the pump 1 may be attached to a rotating driver device driven by the power of the engine or a power unit of the vehicle to circulate the refrigerant.

The configurations described in the above embodiments, which are all examples, can be combined with other known technology and can be combined with each other. It is also possible to omit or change a part of the configurations to the extent that it does not deviate from the gist.

### [Description of Symbols]

- 1: pump,
- 2: electronic device,
- 3: cooler,
- 4: heat dissipation surface,
- 5: radiator,
- 6: accumulator,
- 7: cooling section,
- 8: heating section,
- 9: heater,
- 10, 10a, 10b: Peltier element,
- 11: refrigerant flow path,
- 12: valve,
- 13: bypass flow path,
- 14: porous material,
- 21: main body,
- 100: cooling device,
- 200: artificial satellite

## Claims

1. A cooling device comprising:
a pump for circulating refrigerant by boosting pressure of the refrigerant;
a cooler for evaporating the refrigerant pumped from the pump;
a radiator for condensing the refrigerant evaporated by the cooler;
a refrigerant flow path sequentially connecting the pump, the cooler, and the radiator; and
an accumulator comprising:
a container for storing the refrigerant;
a cooling section for cooling a base-end side of the container; and
a heating section for heating a front-end side of the container,
the base-end side of the container being connected to the refrigerant flow path connecting the pump and the radiator.

2. The cooling device according to claim 1, wherein the cooling section cools the container by bringing the container into thermal contact with the refrigerant flow path on an outlet side of the pump.

3. The cooling device according to claim 2, wherein a bypass flow path provided with a valve is connected to the refrigerant flow path on the outlet side of the pump.

4. The cooling device according to any one of claims 1 to 3, wherein the cooling section comprises a Peltier element, and performs cooling by bringing one side of the Peltier element into contact with the container and by bringing the other side of the Peltier element into contact with the refrigerant flow path on the outlet side of the pump.

5. The cooling device according to any one of claims 1 to 4, wherein the radiator is provided to be in contact with a heat dissipation surface, and the cooling section performs cooling by bringing the container into contact with the heat dissipation surface.

6. The cooling device according to any one of claims 1 to 5, wherein the heating section performs heating by providing a heater for the container.

7. The cooling device according to any one of claims 1 to 6, wherein the heating section comprises the Peltier element, and performs heating by bringing one side of the Peltier element into contact with the container and by bringing the other side of the Peltier element into contact with the refrigerant flow path on the outlet side of the radiator.

8. The cooling device according to any one of claims 1 to 7, wherein the heating section comprises the Peltier element, and performs heating by bringing one side of the Peltier element into contact with the container and by bringing the other side of the Peltier element into contact with the refrigerant flow path on the outlet side of the cooler.

9. The cooling device according to any one of claims 1 to 8, wherein the front-end side of the container of the accumulator and the refrigerant flow path are connected by a bypass flow path provided with a valve.

10. The cooling device according to any one of claims 1 to 9, wherein a porous material is provided on the base-end side of the container of the accumulator.

11. A space structure comprising the cooling device according to any one of claims 1 to 10.
